# EUROPÄISCHE PATENTANMELDUNG

(11) **EP 1 769 873 A1**
(43) Veröffentlichungstag der Anmeldung: **04.04.2007**
(21) Anmeldenummer: 06120665.2
(22) Anmeldetag: 14.09.2006
(51) Int. Cl.: B23K 3/06, B23K 3/08, B23K 1/08, B23K 1/00, B23K 101/42

(54) **Lötvorrichtung zum Löten von Flachbaugruppen mit einer überdeckende Haube aufweisenden Abdeckung**

(30) Priorität: 28.09.2005 DE 102005046563
(71) Anmelder: Messer Group GmbH, 65843 Sulzbach (DE); Messer Austria GmbH, 2352 Gumpoldskirchen (AT)
(72) Erfinder: Hatz, Gottfried, 8461 Ehrenhausen (AT); Tauchmann, Jens, 47269 Duisburg (DE)

(57) **Zusammenfassung**

Bei Lötvorrichtungen zum Löten von Flachbaugruppen (20) nach dem Stand der Technik ist der Lotbehälter (2) unter Aussparung der darin erzeugten Lötwellen (3,4) mit einer Abdeckung (5) zum Aufnehmen einer Inertgasatmosphäre versehen. Zwischen jeweils einer Lötwelle (3,4) und der Abdeckung (5) ist ein Spalt freigehalten, durch den Inertgas aus dem Lotbehälter entlang der Lötwellen geführt wird. Um Druckschwankungen in der Inertgasatmosphäre, durch die die Geometrie der Lötwelle (3,4) beeinträchtigt werden kann, ausgleichen zu können, muss dieser Spalt zwischen Lötwelle und Lotbehälter jedoch eine gewisse Mindestbreite aufweisen, wodurch ein Teil des Inertgases in die Umgebung entweicht und zugleich Umgebungsatmosphäre in den Bereich unterhalb der Abdeckung (5) eindringt. Der Restsauerstoffgehalt einer solchen Anordnung ist also von einer erheblichen Instabilität gekennzeichnet.

Erfindungsgemäß ist eine Abdeckung (5) für einen Lotbehälter (2) mit einer die Lötwelle (3,4) oder einen Teil davon überdeckenden Haube (11,12) ausgerüstet. Die Haube (11,12) wird beim Herannahen einer Flachbaugruppe (20) pneumatisch geöffnet und gibt damit die Lötwelle (3,4) zum Löten frei. Die Erfindung erhöht die Stabilität des Restsauerstoffgehalts innerhalb der Abdeckung (5) und verbessert damit das Lötergebnis.

## Beschreibung

Die Erfindung betrifft eine Lötvorrichtung zum Löten von Flachbaugruppen mit einem Lotbehälter zur Aufnahme eines Lotbades, in dem wenigstens eine Lötwelle erzeugbar ist, mit einer den Lotbehälter unter Aussparung der Lötwelle überspannenden Abdeckung sowie mit einer mit Gasdüsen versehenen Gaszuführung zur Herstellung einer Schutzgasatmosphäre zwischen Lotbad und Abdeckung.

Beim Löten von Flachbaugruppen in Lötvorrichtungen, bei denen die Oberfläche des Lotbades der Luft ausgesetzt ist, besteht das Problem, dass die Oberfläche des Lotbades mit Luftsauerstoff reagiert und eine Oxidschicht erzeugt, die die Benetzung der zu lötenden Verbindungen mit Lot beeinträchtigt. Durch Strömungen innerhalb des Lotbades wird die Oxidschicht ständig aufgerissen, so dass fortlaufend neue Oberflächenbereiche der Oxidation ausgesetzt sind.

Um den Oxidationsprozess zu unterbinden, erfolgt die Benetzung durch das Lötmittel daher meist in einer Schutzgasatmosphäre mit stark reduziertem Sauerstoffanteil. Hierzu wird üblicherweise die gesamte Löteinrichtung oder - wie in der EP 0 500 135 B1 vorgeschlagen - lediglich der eigentliche Lötbehälter mit einem Gehäuse umgeben, in das ein inertes Schutzgas, beispielsweise Stickstoff eingeführt wird. Die Hauben- oder Tunnelkonstruktionen weisen dabei jeweils einen Einlass und einen Auslass für die Flachbaugruppen auf. Um den Anteil des oxidierenden Gases (Sauerstoff) in der Ummantelung möglichst gering zu halten, werden die Ein- und Auslässe durch unterschiedliche Maßnahmen gegen Sauerstoffeintritt abgedichtet, wie sie beispielsweise in den Druckschriften EP 0 500 135 B1, DE 41 42 436 A1, DE 42 19 913 A1, DE 197 49 184 A1 beschrieben werden.

In der DE 41 36 786 A1 ist eine Lotbadkonstruktion beschrieben, bei der eine nach oben offene Lötwanne mittels einer oder mehrerer Glockenkonstruktionen überdeckt wird. Die Glocken tauchen jeweils mit einem umlaufenden Rand in das Lotbad ein und bilden so auf der überdeckten Oberfläche ein kleines mit Inertgas gefülltes Volumen. Die Glocken sind mit einer Versorgungsleitung für Inertgas versehen und weisen eine oder mehrere Arbeitsöffnungen auf, durch die die zu lötenden Teile ein- und ausgeführt werden können.

Die US 5 121 875 beschreibt eine Lötvorrichtung zum Löten unter Schutzgasatmosphäre, bei der der Lotbehälter von einer Schutzgashaube überdeckt ist. Die Haube ist mit dem Lotbehälter gasdicht verbunden und weist Öffnungen zum Ein- bzw. Ausfahren der zu lötenden Flachbaugruppen auf, die jeweils mit Vorhängen gegen das Eindringen von Luftsauerstoff gesichert sind. In das Innere der Haube wird ein Schutzgas über mehrere Einlässe eingespeist und bildet dort eine sauerstoffreduzierte Atmosphäre aus. Das durch die Öffnungen zum Ein- bzw. Ausfahren der Flachbaugruppen aus der Haube entweichende Schutzgas kann mittels geeigneter Einrichtungen abgesogen werden, um eine gesundheitliche Beeinträchtigung des Bedienpersonals durch das Schutzgas oder durch mit dem Schutzgas ausgetragene Lötdampfe zu vermeiden. Problematisch bei dieser, wie auch bei der zuvor genannten Konstruktion ist jedoch, dass es aufgrund von turbulenten Luftströmungen beim Einführen der zu lötenden Bauteile zu einem Eintrag von Luftsauerstoff kommen kann.

Alternativ oder ergänzend zu einer Überdeckung des gesamten Lotbehälters einschließlich des Kanals, in dem die Flachbaugruppen zur Lötwelle geführt werden, kommen auch Lötvorrichtungen zum Einsatz, bei denen der Lotbehälter nur teilweise mit einer schützenden Abdeckung versehen ist. Eine derartige Lötvorrichtung wird beispielsweise in der US 5 203 489 beschrieben. Dabei überspannt die Abdeckung den Lotbehälter, beabstandet von der Oberfläche des Lotbades und unter Aussparung der Lötwellen, wobei zwischen Abdeckung und Lötwelle jeweils ein Spalt offengehalten wird. Zwischen der Lotbadoberfläche und der Abdeckung sind Gasdüsen angeordnet, die zur Erzeugung einer Inertgasatmosphäre zwischen Lotbad und Abdeckung eingesetzt werden. Die Inertgasatmosphäre weist gegenüber der Umgebungsatmosphäre einen geringfügigen Überdruck auf. Das Inertgas strömt durch die Spalte zwischen Abdeckung und Lötwellen aus dem Lotbehälter aus und inertisiert dabei zugleich die Lötwelle.

Um zu verhindern, dass Druckschwankungen in der Inertgasatmosphäre die Lötwelle deformieren und so das Lötergebnis beeinträchtigen können, weisen die Spalte zwischen der Abdeckung und der Lötwelle eine gewisse Mindestbreite auf. Dabei wird die Spaltbreite umso größer gewählt, je zuverlässiger die Druckschwankungen ausgeglichen werden sollen. Problematisch dabei ist jedoch zum einen, dass die größere Spaltbreite zu einem Verlust an Inertgas führt, zum anderen, dass es in der Strömung mit zunehmender Spaltbreite zur verstärkten Entstehung von Turbulenzen kommt, durch die es zum Eintrag von sauerstoffreicher Umgebungsatmosphäre in den Bereich zwischen Lotbad und Abdeckung kommen kann. Hierdurch kommt es zum Anstieg des Restsauerstoffgehalts innerhalb der Abdeckung. Lediglich während der Phasen im Lötprozess, in denen sich eine Flachbaugruppe unmittelbar über der die Lötwelle freigebende Öffnung befindet, wird der Zustrom von Gas aus der Umgebungsatmosphäre reduziert. Im Gegensatz zu den zuvor beschriebenen Lötanlagen mit Schutzgashaube weist diese Art Lötanlagen also eine sehr starke Instabilität des Restsauerstoffgehalts auf, der das Lötergebnis beeinträchtigt; zudem kommt es zur Ausbildung verkrätzter Wellenkanten. Umgekehrt sind Haubenkonstruktionen jedoch sehr aufwendig in Einbau und Wartung und weisen einen erhöhten Platzbedarf auf.

Aufgabe der vorliegenden Erfindung ist daher, eine kostengünstige und platzsparende Lötvorrichtung zu schaffen, bei der ein Eintrag von Umgebungsatmosphäre in den durch die Abdeckung geschützten Bereich weitgehend vermieden wird.

Gelöst ist diese Aufgabe bei einer Lötvorrichtung der eingangs genannten Art und Zweckbestimmung dadurch, dass die Abdeckung mit wenigstens einer Haube ausgerüstet ist, die von einem die Lötwelle überdeckenden Schließzustand in einen Öffnungszustand verbringbar ist, in dem die Lötwelle zwecks Löten der Flachbaugruppen freigegeben wird.

Die die Lötwelle umgebende Öffnung der Abdeckung ist unter Normalbedingungen, d.h. wenn keine Flachbaugruppe mit der Lötwelle in Kontakt kommt, durch die Haube verschlossen. Erst bei Herannahen einer Flachbaugruppe wird die Haube in ihren Öffnungszustand verbracht, woraufhin die Flachbaugruppe der Lötwelle zugeführt werden kann. Während die Flachbaugruppe sich an der Lötwelle befindet, übernimmt die Flachbaugruppe die Funktion der Haube und verhindert weitgehend das Eindringen von Umgebungsluft in den Bereich innerhalb der Abdeckung. Durch die Erfindung wird jedoch nicht nur während dieser Zeit, in der sich die Flachbaugruppe im Bereich der Lötwelle befindet, sondern auch dann, wenn keine Flachbaugruppe in Kontakt mit der Lötwelle steht, der Eintrag von Umgebungsluft in den Raum unterhalb der Abdeckung wirkungsvoll unterbunden. Dadurch wird der Restsauerstoffgehalt unterhalb der Abdeckung auf einen gleichmäßigen Wert gehalten. Zudem wird der Gefahr der Verkrätzung der Wellenkanten vorgebeugt.

Die Lötvorrichtung kann dabei eine Wellenlötanlage oder eine Reflowlötanlage sein. Der Begriff "Wellenlötanlage" bedeutet gemäß der Erfindung eine Anlage in der ein Badlötverfahren mit bewegtem Lotbad zum Einsatz kommt, während unter der Bezeichnung "Reflowlötanlage" hier eine Vorrichtung zu verstehen ist, in der durch unterschiedliche Wärmeenergiequellen bzw. Verfahren zur Erwärmung, z.B. Erwärmung durch Konduktion, Konvektion, Kondensation, Photonen oder eine Kombination dieser Verfahren der Umschmelzvorgang des Lotdepots und damit der Verbindungsbildung zwischen Lötanschluss und Pad-Struktur der Leiterplatte eingeleitet wird. Bei der Auslegung der Lötvorrichtung als Reflowlötanlage ist die Ummantelung zur Aufnahme einer Schutzgasatmosphäre vorgesehen, die beispielsweise aus Inertgas bestehen oder ein Reaktivgas enthalten kann. Beispielsweise kommt ein sauerstoffarmes oder reduzierendes Gas in Betracht, wie etwa Stickstoff oder ein Gasgemisch, das überwiegend aus Stickstoff besteht und weitere reaktive Bestandteile, etwa Wasserstoff, enthält.

Vorteilhafterweise ist die Haube mit einer Betätigungseinrichtung zum Verfahren der Haube von ihrem Schließzustand in ihrem Öffnungszustand ausgerüstet. Die Betätigungseinrichtung wird bevorzugt pneumatisch betrieben und kann beispielsweise eine die Haube bewegende Gasfeder umfassen.

Eine weiter vorteilhafte Ausgestaltung der Erfindung sieht vor, dass die Betätigungseinrichtung derart mit einer Transporteinrichtung für die Flachbaugruppen zusammenwirkt, dass beim Herannahen einer Flachbaugruppe an die Haube diese automatisch in ihren Öffnungszustand verbracht wird und nach Entfernen der Flachbaugruppe automatisch wieder in ihre Schließposition zurückkehrt.

Zweckmäßigerweise ist jeder Flachbaugruppe dabei ein Transponder zugeordnet, der beim Herannahen von einem Sensor erfasst wird, der daraufhin ein Signal an die Betätigungseinrichtung zum Verfahren der Haube absendet. Die Begriffe "Sensor" und Transponder" sind hier sehr allgemein zu verstehen und umfassen alle Einrichtungen beispielsweise elektrischer, magnetischer, elektromagnetischer, optischer oder mechanischer Art, mit denen es möglich ist, eine Zustandsänderung im Gesamtsystem, vorliegend die Bewegung der Flachbaugruppe, zu erkennen und in ein Signal umzuwandeln. Transponder und Sender können auch derart aufeinander abgestimmt sein, dass für unterschiedliche Arten von Flachbaugruppen unterschiedliche Signale ausgesendet werden, bei denen beispielsweise die Dauer oder eine Positionsänderung der Haube der jeweiligen Flachbaugruppe angepasst werden.

In einer besonders bevorzugten Ausgestaltung der Erfindung ist die Haube so ausgestaltet, dass diese in ihrem Schließzustand derart auf der Abdeckung aufliegt, dass zumindest ein Bereich um die Lötwelle herum im wesentlichen gasdicht überdeckt ist, und in ihrem Öffnungszustand in eine von der Abdeckung beabstandeten oder gegenüber dieser verschwenkten Position vorliegt. Die Haube wird dabei bevorzugt in ihrer Gesamtheit bewegt, es ist jedoch auch möglich, die Haube mehrteilig auszubilden und unterschiedliche Teile der Haube in verschiedene Richtungen zu bewegen.

Eine gleichfalls bevorzugte Ausgestaltung der Erfindung sieht vor, dass die Haube mit -in Bewegungsrichtung der Flachbaugruppen gesehen- seitlichen Elementen, die fest mit der Abdeckung verbunden sind, und mit einem bewegbaren Haubendeckel ausgerüstet ist. Der Haubendeckel ist von einer mit den seitlichen Elementen im wesentlichen gasdicht zusammenwirkenden Schließposition in eine Öffnungsposition bewegbar, in der eine Aussparung zwischen den seitlichen Elementen freigegeben wird, die in ihren Abmessungen möglichst genau den Abmessungen einer Flachbaugruppe entspricht. Während des Lötvorgangs ist eine Flachbaugruppe bei dieser Ausgestaltung also in den seitlichen Elementen eingefasst.

Anhand der Zeichnungen sollen nachfolgend Ausführungsbeispiele der Erfindung näher erläutert werden.

In schematischen Ansichten zeigen:

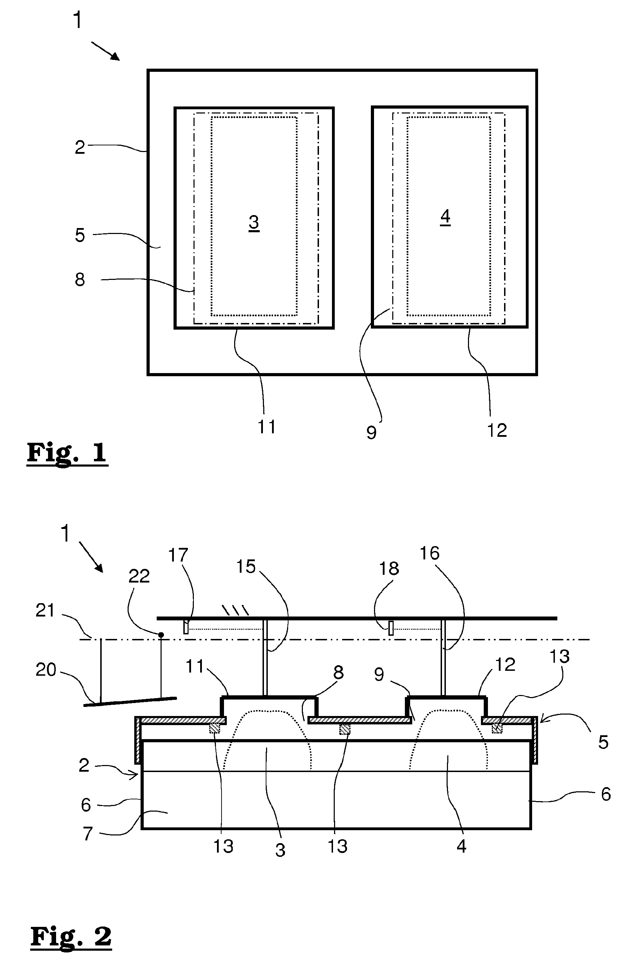

- Fig. 1:: eine Lötvorrichtung im Draufsicht und
- Fig. 2:: die Lötvorrichtung aus Fig .1 mit Befestigungseinrichtungen für Hauben und einer Transporteinrichtung für Flachbaugruppen in einem Längsschnitt.

Die Lötvorrichtung 1 umfasst einen Lötbehälter 2, im Ausführungsbeispiel ein Wellenlöttiegel, der zur Aufnahme eines Lotbades 7 bestimmt ist. Im Lotbad 7 sind zwei Lötwellen 3,4 erzeugbar, eine Vorlötwelle 3 und eine Endlötwelle 4. Die Mittel zur Erzeugung der Lötwellen 3,4 entsprechen denen, die im Stande der Technik üblich sind; sie sind daher in den Figuren nicht gezeigt.

Der Lotbehälter 2 ist mit einer Abdeckung 5 versehen, die an den Seitenwänden 6 des Lotbehälters 2 gasdicht mit diesem verbunden ist. Die den gesamten Lotbehälter 2 überspannende Abdeckung 5 weist im Bereich der Lötwellen 3,4 Aussparungen 8,9 auf. Die Aussparungen 8,9 sind in ihrer Größe den Lötwellen 3,4 derart angepasst, das im bestimmungsgemäßen Betriebszustand der Lötvorrichtung 1 zwischen der Abdeckung 5 und den Lötwellen 3,4 jeweils ein Spalt geringer Breite besteht, durch die eine unterhalb der Abdeckung 5 unter einem leichten Überdruck gehaltene Schutzgasatmosphäre nach außen entweichen kann.

In die Abdeckung 5 ist eine mit Gasdüsen 13 versehene Gaszuführung integriert. Die Gasdüsen 13 erstrecken sich über nahezu die gesamte Breite des Lotbehälters 2 und sorgen für einen gleichmäßigen Zulauf von Inert- oder Schutzgas in den Lotbehälter 2. Bei der Gaszuführung handelt es sich beispielsweise um eine Gaszuführung, wie sie in der DE 197 49 185 A1, beschrieben ist, jedoch können auch andere Gaszuführungen, etwa konventionelle Gasdüsen, zum Einsatz kommen.

Den die Lötwellen 3,4 umgebenden Aussparungen 8,9 sind Hauben 11,12 zugeordnet, die dazu dienen, das Eindringen von Umgebungsluft in den Bereich innerhalb der Abdeckung 5 auch dann zu verhindern, wenn sich keine Flachbaugruppe im Bereich der Lötwellen 2,4 befindet. Die Hauben 11,12 sind in vertikaler Richtung beweglich an Verstellelementen 15,16 aufgehängt, die pneumatisch betätigt werden können und durch die die Hauben 11,12 von einem Schließzustand, in dem die Hauben 11,12 die Aussparungen 8,9 jeweils im wesentlichen gasdicht überdecken, in einen Öffnungszustand bewegt werden können, in dem die Hauben 11,12 vertikal beabstandet von der Abdeckung 5 angeordnet sind. Den Verstellelementen 15,16 sind jeweils elektrische, magnetische, optische oder mechanische Sensoren 17,18 mit integriertem Signalgeber zugeordnet, durch deren Signal die Betätigung der Verstellelemente 15,16 in der unten näher beschriebenen Weise ausgelöst werden kann.

Beim Betrieb der Lötvorrichtung 1 werden im Lotbehälter 2 die Lötwellen 3,4 erzeugt. Zum Löten einer Flachbaugruppe 20, etwa eine mit elektronischen Bauelementen bestückte Platine, wird diese in bekannter Weise mittels einer Transporteinrichtung 21 entlang der Lötwellen 3,4 geführt und mit Lot benetzt. Hierzu müssen die Hauben 11,12 zuvor in ihre jeweilige Öffnungsposition bewegt werden. Die geschieht in der folgenden Weise:
Jeder Flachbaugruppe 20 ist ein Transponder 22 zugeordnet, der mit den Sensoren 17,18 wechselwirkt. Nähert sich eine Flachbaugruppe 20 der Haube 11 wird der Transponder 22 vom Sensor 17 erkannt und ein Betätigungssignal an das Verstellelement 15 ausgesendet. Das Verstellelement 15 verschiebt daraufhin die Haube 11 in ihrer Gesamtheit in vertikaler Richtung und gibt die Vorlötwelle 3 frei. Die von der Transporteinrichtung 21 weiter transportiere Flachbaugruppe 20 kann nun von der Vorlötwelle 3 benetzt werden. Während sich die Flachbaugruppe 20 in Kontakt mit der Vorlötwelle 3 befindet, übernimmt die Flachbaugruppe 20 die Funktion der Haube 11 und hemmt das Eindringen von Umgebungsluft in den Bereich unterhalb der Abdeckung 5. Nachdem die Flachbaugruppe 20 den Bereich der Vorlötwelle 3 verlassen hat, wird die Haube 11 vom Verstellelement 15 automatisch in ihre Schließposition zurückgebracht. Entsprechendes erfolgt an der Haube 12: Der Transponder 22 wird vom Sensor 18 erkannt, daraufhin wird das Verstellelement 16 betätigt und verschiebt die Haube 12 in vertikaler Richtung in ihre Öffnungsposition unter Freigabe der Endlötwelle 4. Nach der Lötvorgang abgeschlossen wurde und die Flachbaugruppe 20 den Bereich der Endlötwelle 4 verlassen hat, wird die Haube 12 in ihre Schließposition zurückbewegt. Die die Lötwellen 3,4 umgebenden Aussparungen 8,9 werden sogleich nach dem jeweiligen Lötvorgang von den Hauben 11,12 im Wesentlichen gasdicht überdeckt, wodurch das Eindringen von Umgebungsluft in den Bereich unterhalb der Abdeckung 5 weitgehend verhindert wird. Der Restsauerstoffgehalt innerhalb der Abdeckung 5 bleibt also auch dann auf einem sehr niedrigen Wert, wenn sich keine Flachbaugruppe in Kontakt mit einer der Lötwellen 3,4 befindet.

Anstelle der in der Zeichnung gezeigten Hauben 11,12, die in ihrer Gesamtheit in vertikaler Richtung verschiebbar sind, können auch andere Konstruktionen zum Einsatz kommen, die gleichfalls eine weitgehend gasdichte Überdeckung der Aussparungen 8,9 ermöglichen. Beispielsweise können die Hauben 11,12 durch entsprechende Betätigungsvorrichtungen auch verschwenkt oder zur Seite hin bewegt werden. Es sind auch mehrteilige Haubenkonstruktionen denkbar; beispielsweise kann eine Haube jeweils zwei - in Bewegungsrichtung der Flachbaugruppen 20 gesehen - seitliche Wangen aufweisen, die fest mit der Abdeckung 5 verbunden sind einen bewegbaren Haubendeckel einfassen, der in seinen Abmessungen möglichst genau den Abmessungen einer Flachbaugruppe entspricht. Beim Herannahen der Flachbaugruppe 20 wird nur der Haubendeckel in eine Öffnungsposition gebracht. Während des Lötvorgangs ist die Flachbaugruppe 20 seitlich von den beiden Wangen eingefasst. Bei einer solchen Ausgestaltung wird der Eintrag von Umgebungsluft vor und während des Lötvorgangs besonders wirksam unterbunden.

### Bezugszeichenliste:

- 1.: Lötvorrichtung
- 2.: Lötbehälter
- 3.: Vorlötwelle
- 4.: Endlötwelle
- 5.: Abdeckung
- 6.: Seitenwand
- 7.: Lotbad
- 8.: Aussparung
- 9.: Aussparung
- 10.: -
- 11: Haube
- 12.: Haube
- 13.: Gasdüse
- 14.: -
- 15.: Verstellelement
- 16.: Verstellelement
- 17.: Sensor mit Signalgeber
- 18.: Sensor mit Signalgeber
- 19.: -
- 20.: Flachbaugruppe
- 21.: Transporteinrichtung
- 22.: Transponder

## Patentansprüche

1. Lötvorrichtung zum Löten von Flachbaugruppen (20) mit einem Lotbehälter (2) zur Aufnahme eines Lotbades (7), in dem wenigstens eine Lötwelle (3,4) erzeugbar ist, mit einer den Lotbehälter (2) unter Aussparung der Lötwelle (3,4) überspannenden Abdeckung (5) sowie mit einer mit Gasdüsen (13) versehenen Gaszuführung zur Herstellung einer Schutzgasatmosphäre zwischen Lotbad (7) und Abdeckung (5),
**dadurch gekennzeichnet,**
**dass** die Abdeckung (5) mit wenigstens einer Haube (11,12) ausgerüstet ist, die von einem die Lötwelle (3,4) überdeckenden Schließzustand, in einen Öffnungszustand verbringbar ist, in dem die Lötwelle (3,4) zwecks Löten der Flachbaugruppen (20) freigegeben wird.

2. Lötvorrichtung nach Anspruch 1, **dadurch gekennzeichnet, dass** die Haube (11,12) mit einer - vorzugsweise pneumatisch betriebenen - Betätigungseinrichtung (15,16) zum Verfahren der Haube (11,12) von ihrem Schließzustand in ihrem Öffnungszustand ausgerüstet ist.

3. Lötvorrichtung nach Anspruch 1 oder 2, **dadurch gekennzeichnet, dass** die Betätigungseinrichtung (15,16) derart mit einer Transporteinrichtung (21) für die Flachbaugruppen (20) zusammenwirkt, dass beim Herannahen einer Flachbaugruppe (20) an die Haube (11,12) diese in ihren Öffnungszustand verbracht wird.

4. Lötvorrichtung nach Anspruch 3, **dadurch gekennzeichnet, dass** der Betätigungseinrichtung (15, 16) ein Sensor (17,18) zugeordnet ist, der mit einem Transponder (22) der Flachbaugruppe (20) zusammenwirkt.

5. Lötvorrichtung nach einem der vorhergehenden Ansprüche, **dadurch gekennzeichnet, dass** die Haube (11,12) in ihrem Schließzustand derart auf der Abdeckung (5) aufliegt, dass zumindest ein Bereich um die Lötwelle (3,4) herum im wesentlichen gasdicht überdeckt ist, und in ihrem Öffnungszustand in eine von der Abdeckung (5) beabstandeten oder gegenüber dieser verschwenkten Position vorliegt.

6. Lötvorrichtung nach einem der vorhergehenden Ansprüche, **dadurch gekennzeichnet, dass** die Haube (11,12) mehrteilig ausgebildet und mit -in Bewegungsrichtung der Flachbaugruppen (20) gesehen- seitlichen Elementen, die fest mit der Abdeckung (5) verbunden sind, sowie mit einem bewegbaren Haubendeckel ausgerüstet ist, der von einer mit den seitlichen Elementen im wesentlichen gasdicht zusammenwirkenden Schließposition in eine eine Aussparung zwischen den seitlichen Elementen freigebende Öffnungsposition bewegbar ist, welche Aussparung in ihren Abmessungen möglichst genau den Abmessungen einer Flachbaugruppe (20) entspricht.
